# EUROPÄISCHE PATENTANMELDUNG

(11) **EP 2 385 745 A1**
(43) Veröffentlichungstag der Anmeldung: **09.11.2011**
(21) Anmeldenummer: 11176419.7
(22) Anmeldetag: 02.11.2004
(51) Int. Cl.: H05B 6/06, H02M 7/48

(54) **Verfahren zur Vermeidung bzw. Reduktion von Störschall in einer Umrichterschaltung bei gleichzeitigem Betrieb mehrerer Ausgänge**

(30) Priorität: 03.11.2003 ES 200302616
(62) Teilanmeldung aus: 04817399.1
(71) Anmelder: BSH Bosch und Siemens Hausgeräte GmbH, 81739 München (DE)
(72) Erfinder: Barragan Perez Luis, 50018 Zaragoza (ES); Burdio Pinilla José Miguel, 50018 Zaragoza (ES); Hernandez Blasco,, 50410 Cuarte de Huerva (Zagaroza) (ES); Llorente Gil Sergio,, 5009 Zaragoza (ES); Llorente Perez Alfonso,, 50019 Zaragoza (ES); Monterde Aznar Fernando,, 50013 Zaragoza (ES)

(57) **Zusammenfassung**

Die vorliegende Erfindung betrifft ein Verfahren zum Betreiben einer Umrichterschaltung mit mindestens zwei Ausgängen, die mit je einer Last, insbesondere je einer Induktionsspule (I1, I2), verbunden sind, wobei ein erster der Ausgänge (I1) mit einer ersten Umschaltfrequenz (f1) und gleichzeitig ein zweiter der Ausgänge (I2) mit einer zweiten, von der ersten verschiedenen Umschaltfrequenz (f2) betrieben wird, so dass Störschall mit einer Frequenz (fS) erzeugt wird, die sich aus einer Überlagerung der ersten Umschaltfrequenz (f1) mit der zweiten Umschaltfrequenz (f2) ergibt. Die Umrichterschaltung wird derart betrieben, dass die Frequenz (fS) des Störschalls kleiner ist als eine erste Grenzfrequenz (g1) und/oder größer ist als eine zweite Grenzfrequenz (g2).

## Beschreibung

Die vorliegende Erfindung betrifft ein Verfahren zum Betreiben einer Umrichterschaltung mit mindestens zwei Ausgängen, die mit je einer Last, insbesondere je einer Induktionsspule, verbunden sind, wobei ein erster der Ausgänge mit einer ersten Umschaltfrequenz und gleichzeitig ein zweiter der Ausgänge mit einer zweiten, von der ersten verschiedenen Umschaltfrequenz betrieben wird, so dass Störschall mit einer Frequenz erzeugt wird, die sich aus einer Überlagerung der ersten Umschaltfrequenz mit der zweiten Umschaltfrequenz ergibt.

Moderne Induktionskochfelder sind üblicherweise mit zwei oder vier Induktionskochstellen ausgestattet. Die Induktionskochstellen weisen Induktionsspulen auf, die über Umrichterschaltungen mit hochfrequenten Betriebsströmen versorgt werden. Es ist bekannt zwei Induktionsspulen gemeinsam durch eine Umrichterschaltung mit zwei Ausgängen zu betreiben, wobei jeder der Ausgänge mit einer Induktionsspule verbunden ist. Um Störgeräuschen bei gleichzeitigem Betrieb der beiden Ausgänge zu vermeiden oder zu reduzieren, sind verschiedene Vorgehensweisen vorgeschlagen worden.

Aus DE 196 54 268 C2 ist ein Verfahren zum Betreiben der Umrichterschaltung bekannt, bei dem beide Ausgänge der Umrichterschaltung im Zeitmultiplex betrieben werden, so dass keine Störgeräusche entstehen können. Der Nachteil dieses Verfahrens besteht darin, dass eine aufwendige Ansteuerung und eine Überdimensionierung der Leistungselektronik notwendig ist.

Wird auf das Betreiben der Ausgänge im Zeitmultiplex verzichtet und die beiden Induktionsspulen gleichzeitig mit Betriebsströmen unterschiedlicher Frequenz versorgt, so entstehen Störgeräusche. Es ist bekannt durch Drosselspulen, die in Serie zur Induktionsspule geschaltet sind, diese Störgeräusche zu reduzieren. Der Nachteil dieses Verfahrens besteht darin, dass das Verfahren nicht immer stabil ist. Zudem können die Störgeräusche nur gedämpft werden und die Drosselspulen sind als zusätzliche Bauteile nötig, wodurch sich die Umrichterschaltung verteuert.

Der Erfindung liegt die Aufgabe zugrunde, ein verbessertes und kostengünstiges Verfahren zum Betreiben einer Umrichterschaltung mit mindestens zwei Ausgängen, insbesondere für ein Induktionskochfeld, zur Verfügung zu stellen.

Diese Aufgabe wird durch ein Verfahren zum Betreiben einer Umrichterschaltung mit den Merkmalen von Anspruch 1 gelöst.

Bei einer Umrichterschaltung mit mindestens zwei Ausgängen, die mit je einer Last, insbesondere je einer Induktionsspule, verbunden sind, wird ein erster der Ausgänge mit einer ersten Umschaltfrequenz und gleichzeitig ein zweiter der Ausgänge mit einer zweiten, von der ersten verschiedenen Umschaltfrequenz betrieben. Auf diese Weise wird Störschall mit einer Frequenz erzeugt, die sich aus einer Überlagerung der ersten Umschaltfrequenz mit der zweiten Umschaltfrequenz ergibt. Die Umrichterschaltung wird derart betrieben, dass die Frequenz des Störschalls kleiner ist als eine erste Grenzfrequenz und/oder größer ist als eine zweite Grenzfrequenz. Dieses Vorgehen hat den Vorteil, dass Störschall mit einer Frequenz erzeugt werden kann, die außerhalb des menschlichen Hörbereichs liegt, indem die erste Grenzfrequenz und die zweite Grenzfrequenz entsprechend gewählt werden. Des weiteren können die Induktionsspulen mit Frequenzen betrieben werden, bei denen ein hoher Wirkungsgrad erzielt werden kann. Außerdem kann auf zusätzliche Bauteile wie Drosselspulen zur Reduzierung des Störschalls verzichtet werden.

Gemäß einer bevorzugten Ausführungsform ist vorgesehen, dass die erste Umschaltfrequenz und/oder die zweite Umschaltfrequenz derart betrieben wird, dass die Frequenz des Störschalls kleiner ist als die erste Grenzfrequenz und/oder größer ist als die zweite Grenzfrequenz. Die Umschaltfrequenzen der Ausgänge können über intelligente Leistungsschalter auf einfache Weise angepasst werden.

Vorteilhafterweise wird eine elektrische Leistung zumindest eines der Ausgänge durch eine relative Einschaltdauer und/oder die Umschaltfrequenz geregelt. Somit kann die Umrichterschaltung mit den Induktionsspulen derart betrieben werden, dass ein hoher Wirkungsgrad erreicht wird.

Gemäß einer bevorzugten Ausführungsform ist vorgesehen, dass die erste Grenzfrequenz und/oder die zweite Grenzfrequenz abhängig von einem Pegel des Störschalls bestimmt wird. Auf diese Weise können die Grenzfrequenzen an die menschliche Hörschwelle angepasst werden, so dass der Störschall nicht wahrgenommen werden kann.

Insbesondere werden die erste Grenzfrequenz und/oder die zweite Grenzfrequenz abhängig von einer elektrischen Gesamtleistung der Ausgänge bestimmt. Der Pegel des Störschalls ist von der elektrischen Gesamtleistung der Ausgänge abhängig und die elektrische Gesamtleistung kann leicht bestimmt werden. Auf diese Weise können die Grenzfrequenzen besonders leicht an die menschliche Hörschwelle angepasst werden.

Gemäß einer bevorzugten Ausführungsform ist vorgesehen, dass die erste Grenzfrequenz 2 Kilohertz und/oder die zweite Grenzfrequenz 14 Kilohertz beträgt. Für diese Grenzfrequenzen liegt die menschliche Hörschwelle sehr hoch, so dass der Pegel des Störschalls die menschliche Hörschwelle nicht erreicht oder nur unwesentlich überschreitet.

Insbesondere betrifft die Erfindung ein Induktionsgargerät, wie z. B. ein Induktionskochfeld oder einen Herd mit einem Induktionsheizelement.

Die Erfindung und ihre Weiterbildungen werden nachfolgend anhand von Zeichnungen näher erläutert:

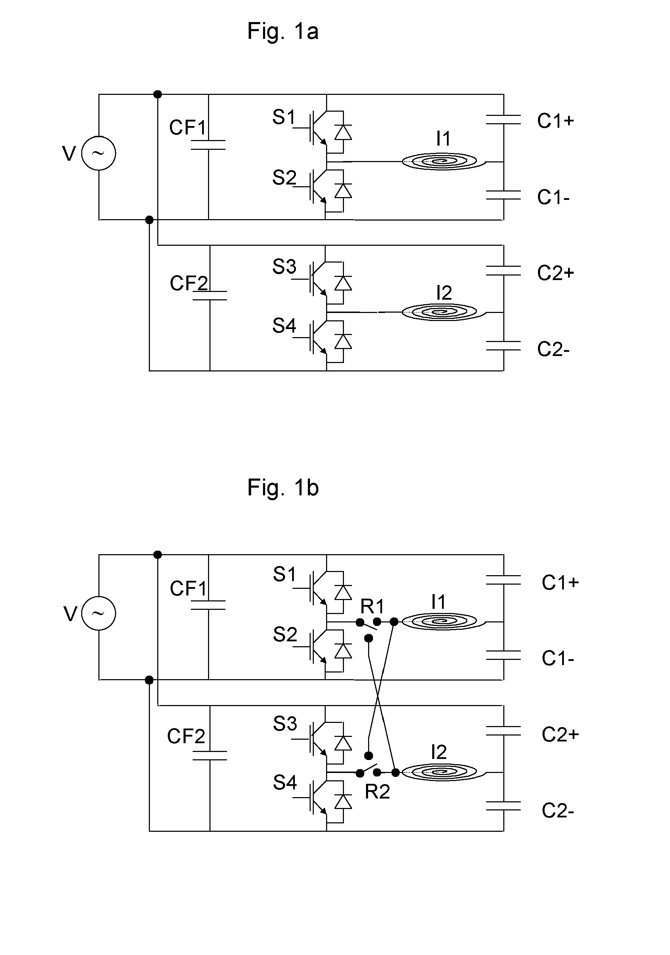

- Fig.1a: zeigt eine erste Ausführungsform einer Umrichterschaltung,
- Fig. 1 b: zeigt eine zweite Ausführungsform einer Umrichterschaltung,
- Fig.2: zeigt eine schematische Darstellung möglicher Frequenzen eines Störschalls bei Betrieb der Umrichterschaltungen gemäß Figur 1,
- Fig.3: zeigt einen schematischen Verlauf der menschlichen Hörschwelle,
- Fig.4: zeigt einen schematischen zeitlichen Verlauf einer Periode einer Ausgangsspannung der Umrichterschaltungen gemäß Figur 1, und
- Fig.5: zeigt eine schematische Darstellung einer Anpassung von elektrischen Ausgangsleistungen für die Umrichterschaltungen gemäß Figur 1 unter Berücksichtigung von einer ersten und einer zweiten Grenzfrequenz.

**Figur 1a und 1b** zeigen in schematischer Darstellung zwei verschiedene Ausführungsformen einer Umrichterschaltung mit zwei Ausgängen bzw. Induktionsspulen. Hierin bezeichnet V eine Spannungsquelle, I1 eine erste und I2 eine zweite Induktionsspule, S1, S2, S3 und S4 Hochfrequenzschalter, CF1 und CF2 kapazitive Eingangsfilter und C1+, C1-, C2+ und C2- Kondensatoren. Die zweite Ausführungsform (Fig. 1b) unterscheidet sich von der ersten Ausführungsform (Fig.1a) dadurch, dass zwei Umschalter R1, R2 zur Rekonfigurierung der Topologie vorgesehen sind, für den Fall, dass nicht beide Induktionsspulen I1, I2 eingeschaltet bzw. nicht beide Ausgänge aktiv sind.

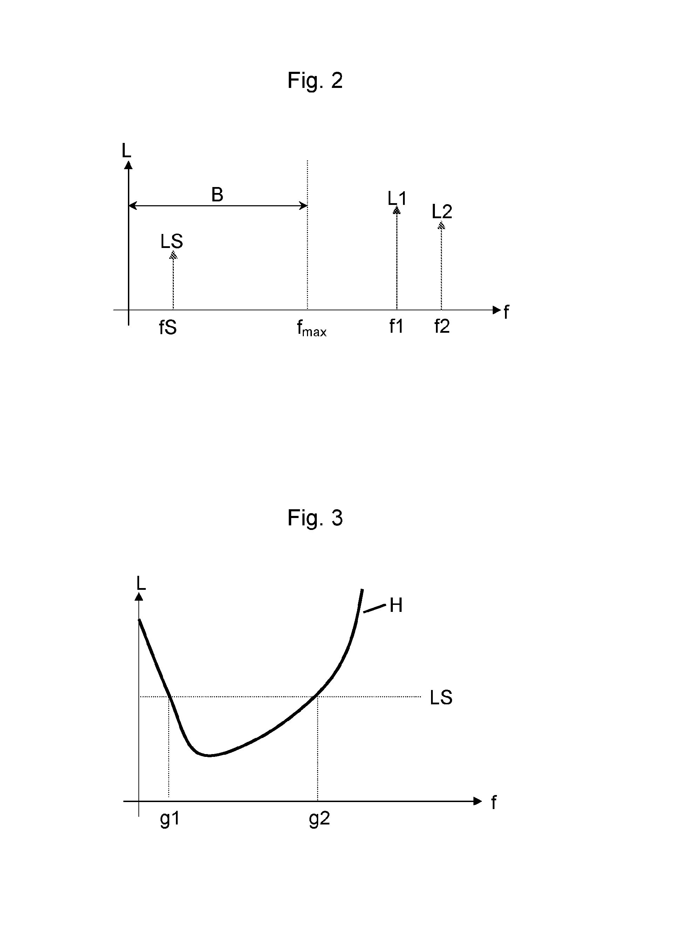

**Figur 2** zeigt eine schematische Darstellung möglicher Frequenzen eines Störschalls bei Betrieb der Umrichterschaltungen gemäß Figur 1a oder 1b. Die erste Induktionsspule I1 wird mit einer ersten Umschaltfrequenz f1 und die zweite Induktionsspule I2 mit einer zweiten Umschaltfrequenz f2 betrieben, die größer ist als die erste Umschaltfrequenz f1. Beide Umschaltfrequenzen f1, f2 liegen über einer maximalen Frequenz fₘₐₓ, die vom menschlichen Gehör wahrgenommen werden kann. Auf diese Weise kann Störschall, der mit den Umschaltfrequenzen f1 und f2 entsteht, nicht vom Menschen gehört werden. Durch eine Überlagerung der beiden Umschaltfrequenzen f1, f2 entsteht weiterer Störschall mit beispielsweise einer Frequenz fS, die einer Differenz aus der zweiten Umschaltfrequenz f2 minus der ersten Umschaltfrequenz f1 entspricht. Diese Frequenz fS kann in einem Frequenzband B liegen, welches die vom Menschen wahrnehmbaren Frequenzen angibt. Der Störschall kann bei unterschiedlichen Frequenzen f1, f2, fS unterschiedliche Pegel L1, L2, LS haben, was durch Pfeile unterschiedlicher Länge bei den Frequenzen f1, f2 und fS in Figur 2 angedeutet ist.

**Figur 3** zeigt einen schematischen Verlauf der menschlichen Hörschwelle H. Je nach Frequenz f kann vom menschlichen Gehör ein unterschiedlicher minimaler Schallpegel L wahrgenommen werden, der durch den Verlauf der Hörschwelle H in Figur 3 angegeben ist. Anhand des Pegels LS des Störschalls und dessen Schnittpunkte mit dem Verlauf der Hörschwelle H werden eine erste Grenzfrequenz g1 und eine zweite Grenzfrequenz g2 festgelegt, wobei die erste Grenzfrequenz g1 kleiner ist als die zweite Grenzfrequenz g2. Die Umrichterschaltungen gemäß Figur 1a und 1b werden erfindungsgemäß so betrieben, dass die Frequenz fS des Störschalls kleiner ist als die erste Grenzfrequenz g1 oder größer als die zweite Grenzfrequenz g2. Auf diese Weise liegt der Störschall außerhalb des menschlichen Hörbereichs und kann somit nicht wahrgenommen werden. Der Pegel LS des zu erwartenden Störschalls kann beispielsweise anhand der Umschaltfrequenzen f1, f2 und der den Induktionsspulen I1, I2 zugeführten elektrischen Leistungen P1 und P2 abgeschätzt werden. Alternativ können experimentelle Grenzfrequenzen g1, g2 festgelegt werden, beispielsweise die erste Grenzfrequenz g1 bei 2 Kilohertz und die zweite Grenzfrequenz g2 bei 14 Kilohertz.

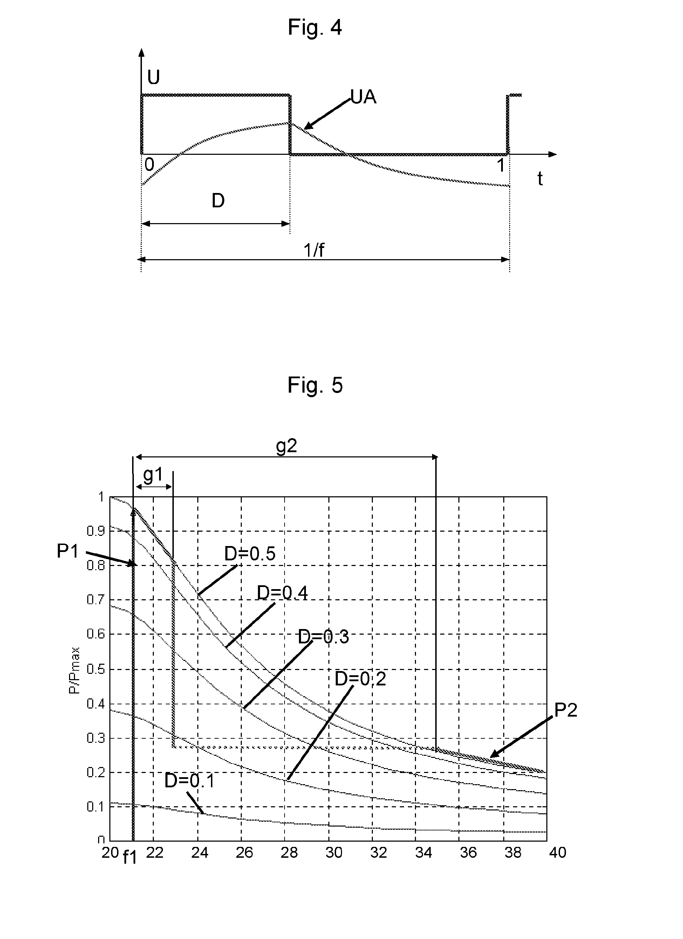

Parameter für eine Anpassung der den Induktionsspulen I1, I2 zugeführten elektrischen Leistungen P1, P2 sind zum einen die Umschaltfrequenzen f1, f2 und zum anderen eine relative Einschaltdauer D. In **Figur 4** ist ein schematischer zeitlicher Verlauf einer Periode einer Ausgangsspannung UA der Umrichterschaltungen gemäß Figur 1a und 1b gezeigt. Die Periode 1/f ist in Figur 4 auf Eins normiert. Die Ausgangsspannung UA steigt während der relativen Einschaltdauer D an und klingt danach langsam wieder ab. Die den Induktionsspulen I1, I2 zugeführten elektrischen Leistungen P1, P2 werden für relative Einschaltdauern D von 0,5 maximal.

In **Figur 5** ist eine schematische Darstellung einer Anpassung der elektrischen Ausgangsleistungen P1 und P2 für die beiden Induktionsspulen I1, I2 gemäß den Umrichterschaltungen aus Figur 1a und 1b unter Berücksichtigung der beiden Grenzfrequenzen g1 und g2 gezeigt. Für beispielsweise die erste Induktionsspule I1, die von beiden Induktionsspulen I1, I2 die höhere elektrische Leistung P1 benötigt, wird die Umschaltfrequenz f1 beispielsweise bei 21 Kilohertz und die relative Einschaltdauer D bei 0,5 festgelegt. Die elektrische Leistung P2 für die zweite Induktionsspule I2 wird nun durch die relative Einschaltdauer D und durch die Umschaltfrequenz f2 unter Berücksichtigung der beiden Grenzfrequenzen g1 und g2 eingestellt. Die zweite Umschaltfrequenz f2 kann im Bereich zwischen der ersten Umschaltfrequenz f1 (hier 21 Kilohertz) und der Summe aus erster Umschaltfrequenz f1 und erster Grenzfrequenz g1 liegen (hier 23 Kilohertz) und oberhalb der Summe aus erster Umschaltfrequenz f1 und zweiter Grenzfrequenz g2 liegen (hier 35 Kilohertz). Auf diese Weise ist sichergestellt, dass der Störschall mit der Frequenz fS, die aus der Differenz der zweiten Umschaltfrequenz f2 und der ersten Umschaltfrequenz f1 entsteht, vom menschlichen Gehör nicht wahrgenommen wird.

### Bezugszeichenliste

- B: Frequenzband
- C1+: Kondensator
- C1-: Kondensator
- C2+: Kondensator
- C2-: Kondensator
- CF1: Kapazitives Eingangsfilter
- CF2: Kapazitives Eingangsfilter
- D: Relative Einschaltdauer
- F: Frequenz
- fₘₐₓ: Maximale Frequenz, die vom menschlichen Gehör wahrgenommen wird
- f1: Umschaltfrequenz der ersten Induktionsspule
- f2: Umschaltfrequenz der zweiten Induktionsspule
- fS: Frequenz des Störschalls
- g1: Erste Grenzfrequenz
- g2: Zweite Grenzfrequenz
- H: Hörschwelle
- I1: Erste Induktionsspule
- I2: Zweite Induktionsspule
- L: Schallpegel
- L1: Schallpegel bei der ersten Umschaltfrequenz
- L2: Schallpegel bei der zweiten Umschaltfrequenz
- LS: Pegel des Störschalls bei fS
- P: Elektrische Leistung
- P1: Elektrische Leistung der ersten Induktionsspule
- P2: Elektrische Leistung der zweiten Induktionsspule
- R1: Umschalter
- R2: Umschalter
- t: Zeit
- U: Spannung
- UA: Ausgangsspannung
- V: Spannungsquelle

## Patentansprüche

1. Verfahren zum Betreiben einer Umrichterschaltung
- mit mindestens zwei Ausgängen, die mit je einer Last, insbesondere je einer Induktionsspule (I1, I2), verbunden sind,
- wobei ein erster der Ausgänge (I1) mit einer ersten Umschaltfrequenz (f1) und gleichzeitig ein zweiter der Ausgänge (I2) mit einer zweiten, von der ersten verschiedenen Umschaltfrequenz (f2) betrieben wird, so dass Störschall mit einer Frequenz (fS) erzeugt wird, die sich aus einer Überlagerung der ersten Umschaltfrequenz (f1) mit der zweiten Umschaltfrequenz (f2) ergibt,
- wobei die Umrichterschaltung derart betrieben wird, dass die Frequenz (fS) des Störschalls kleiner ist als eine erste Grenzfrequenz (g1) oder größer ist als eine zweite Grenzfrequenz (g2).

2. Verfahren nach Anspruch 1, bei dem sich die erste Umschaltfrequenz (f1) und die zweite Umschaltfrequenz (f2) um eine Frequenz von mindestens 17kHz unterscheiden.

3. Verfahren nach einem der vorhergehenden Ansprüche, bei dem die zweite Umschaltfrequenz (f2) um mindestens 17kHz größer als die erste Umschaltfrequenz (f1) ist oder bei dem die zweite Umschaltfrequenz (f2) um mindestens 17kHz kleiner als die erste Umschaltfrequenz (f1) ist.

4. Verfahren nach einem der vorhergehenden Ansprüche, bei dem die erste Umschaltfrequenz (f1) und/oder die zweite Umschaltfrequenz (f2) derart eingestellt wird, dass die Frequenz (fS) des Störschalls kleiner als die erste Grenzfrequenz (g1) und/oder größer als die zweite Grenzfrequenz (g2) ist.

5. Verfahren nach einem der vorhergehenden Ansprüche, bei dem eine elektrische Leistung (P1, P2) zumindest eines der Ausgänge (I1, I2) durch eine relative Einschaltdauer (D) und/oder die Umschaltfrequenz (f1, f2) geregelt wird.

6. Verfahren nach einem der vorhergehenden Ansprüche, bei dem die erste Grenzfrequenz (g1) und/oder die zweite Grenzfrequenz (g2) abhängig von einem Pegel (LS) des Störschalls bestimmt wird/werden.

7. Verfahren nach einem der vorhergehenden Ansprüche, bei dem die erste Grenzfrequenz (g1) und/oder die zweite Grenzfrequenz (g2) abhängig von einer elektrischen Gesamtleistung (P1, P2) der Ausgänge (I1, I2) bestimmt wird.

8. Verfahren nach einem der vorhergehenden Ansprüche, bei dem die erste Grenzfrequenz (g1) 2 Kilohertz und/oder die zweite Grenzfrequenz (g2) 14 Kilohertz beträgt.
